# EUROPEAN PATENT APPLICATION

(11) **EP 3 725 451 A1**
(43) Date of publication of application: **21.10.2020**
(21) Application number: 17842322.4
(22) Date of filing: 12.12.2017
(51) Int. Cl.: B23K 20/12

(54) **SYSTEM FOR MEASURING TEMPERATURES GENERATED DURING THE FRICTION STIR WELDING PROCESS**

(71) Applicant: LORTEK S. COOP., 20240 Ordizia (Gipuzkoa) (ES)
(72) Inventor: ALDANONDO BEGUIRISTAIN, Egoitz, 20240 ORDIZIA (GIPUZKOA) (ES); ARRUTI MENDIZABAL, Ekaitz, 20240 ORDIZIA (GIPUZKOA) (ES); ECHEVERRÍA ZUBIRIA, Alberto, 20240 ORDIZIA (GIPUZKOA) (ES)
(74) Representative: Herrero & Asociados, S.L.
(86) International application number: PCT/ES2017/070807
(87) International publication number: WO 2019/115841

(57) **Abstract**

The present invention relates to an electronic system for measuring temperatures generated during the friction stir welding process which allows measuring and displaying and/or recording the maximum temperatures reached during the process in a continuous, repeatable and reliable manner. To do this, the system of the invention uses one or several thermocouples in the actual FSW welding tool, placing each thermocouple in a hole with a position and features allowing the thermocouple to measure the maximum temperature in a precise, repeatable and reliable manner (since the point of placement has an enormous influence on maximum temperature measurement conditions).

## Description

### Technical Field of the Invention

The invention relates to a system for measuring temperatures, and more specifically, in a system for measuring temperatures in a friction stir-type welding (FSW).

### Background of the Invention

Friction stir welding (FSW) is a process for joining two workpieces to one another which is performed in solid state and in which a (usually cylindrical) tool with a pin at its end is plunged into the joint between the two workpieces that are going to be welded to one another.

The procedure followed in a conventional embodiment of friction stir welding consists of a cylindrical tool shoulder (cylindrical workpiece), directly or indirectly housed in a coupling head, as well as a tool pin projecting from the shoulder set to rotate about the longitudinal axis of the pin (which usually coincides with the axis of the tool shoulder). Once the tool reaches the necessary rotation speed, the pin enters the joint between the workpieces and the temperature of that area starts to increase due to friction and deformation, and the material starts to soften, taking on a plastic state. At that time the tool is moved along the joint, moving the material located on the front face of the pin to the rear face through the rotational movement of said tool, and this is when the material cools down and goes back again to a solid state, the weld thereby being produced. Once the joint has been performed, the tool is removed, leaving a small hole corresponding to the pin which could be eliminated by changing the type of pin.

Control of the temperature that is reached during the entire process (particularly maximum temperatures) is extremely important in this procedure, since the temperature must be sufficient for the weld to be correctly generated, but not too high because it may cause damage in both the welding tool and in the welded workpieces.

There are already a number of mechanisms (methods) for acquiring temperature measurements in FSW weldings, but they all have serious drawbacks that have not been solved up until now. These temperature measurement methods can be classified into the following types:
1. Methods using infrared thermography. Mechanisms using this technique have the following drawbacks:
   - Need for an IR thermographic camera → It has a high cost and presents difficulties in terms of integration in the FSW welding machine head.
   - Possibility to sense only surface temperatures.
   - Difficulties in acquiring temperature measurements in a precise manner (due to reflections, difficulties in calibrating the emissivity for different materials, surface state of the materials, etc.).
   - Difficulties in measuring the maximum temperature reached in the weld. Impossible to be performed successively in a reliable and repeatable manner.
2. Thermoelectric methods. Mechanisms using this technique have the following drawbacks:
   - Complexity in assembling the measurement system in manufacture (head and workpieces to be welded).
   - Difficulties in acquiring temperature measurements in a precise manner (the system measures "average" temperatures on the entire surface between the FSW welding tool and the welded material).
   - Difficulties in measuring the maximum temperature reached in the weld. Impossible to be performed successively in a reliable and repeatable manner.
   - Need to make complex adjustments for calibrating the system to enable taking correct measurements (Seebeck coefficients, disturbance factors, etc.).
3. Methods with thermocouples in the material to be welded. Mechanisms using this technique have the following drawbacks:
   - Possibility of measuring temperatures only from time to time. It is not possible to take a continuous temperature measurement during FSW welding.
   - Need to place thermocouples in each workpiece to be welded. Furthermore, it is usually necessary to modify-machine the workpieces to place the thermocouples.
   - Impossibility of measuring the maximum temperature reached in the weld due to the need to place the tip of the thermocouple in the region of the weld bead (the resulting weld strength is reduced, and the tip of the thermocouple is usually damaged).
4. Methods with thermocouples in the actual FSW welding tool. Up until now, in mechanisms using this technique the main drawback has been the difficulties in measuring the maximum temperature reached in the weld in a precise, repeatable and continuous manner (without damaging the thermocouple).

### Summary of the Invention

The system for measuring temperatures of the present invention solves the aforementioned drawbacks of the current art in that it allows measuring and recording the maximum temperatures reached in a friction stir welding process (FSW) in a precise, repeatable and continuous manner.

To achieve this, the system of the invention uses one or several thermocouples in the actual FSW welding tool, placing each thermocouple in a through hole, where said hole has a position which allows the thermocouple to measure the maximum temperature in a precise, repeatable and reliable manner (since the point of placement and the way of placing the thermocouple has an enormous influence on maximum temperature measurement conditions). Specifically, in the present invention the tip of the thermocouple is placed right in the tool shoulder and tool tip or pin attachment area (attachment point), because at this point and with the placement that will be described below, the material (for example, softened aluminum) does not enter the hole, therefore the tip of the thermocouple does not move, is not damaged and it is the area where the maximum temperature is reached in FSW. The maximum temperature is thereby measured in a precise, repeatable and reliable manner.

In a first aspect of the invention, a system for measuring temperatures generated during the friction stir welding process is proposed. Said welding is performed by rotating a friction stir welding tool (also called FSW tool) plunging a shoulder from which there emerges a pin (which is introduced or pressed between the workpieces to be welded), where said system comprises:
- the friction stir welding tool including one or several through holes, with one end located on one side of the tool shoulder and the other end located in the tool pin and shoulder attachment area (also called join area);
- one or several thermocouples (for example, type K thermocouples with a threaded tip 0.5 mm in diameter, although type E, J, T, N, B, R, or S thermocouples, or any other type of thermocouples, can be used) to measure the maximum temperature of the welding process. Each thermocouple is housed in one of said holes such that the thermocouple measuring tip reaches the end of the through hole which is in the shoulder and pin attachment area. In other words, the thermocouple is introduced until the bottom of the hole.

In addition to these through holes in the indicated position (shoulder and pin attachment area), the tool can also have other holes in other positions or blind (non-through) holes, where other thermocouples will be housed to measure non-maximum temperatures. In other words, generally speaking, in the FSW tool there will be as many through holes in the indicated position as there are thermocouples to be used to measure the maximum process temperature, but there may be other holes housing other thermocouples to measure the temperature during the process in some other areas of the FSW tool (non-maximum temperatures).

In a preferred embodiment, each of the holes forms an angle between 30- and 60-degrees, and more specifically a 30-degree angle, with the axis of rotation of the welding tool (longitudinal axis of the pin). Although in other embodiments, each of the holes may of course form any other angle with the axis of rotation of the welding tool (longitudinal axis of the pin).

The holes usually have a circular section the diameter of which will depend on the thermocouples used (since they must fit inside the hole). In an embodiment, the diameter of the holes will be 0.6 mm or 0.8 mm in diameter, for example.

The FSW tool may have different shapes, and in one embodiment the shoulder, the pin or both can be cylindrical. It is common for the pin to not be completely cylindrical and to have specific thread-type shapes, planar shapes, or any other shape. The shoulder also usually has specific shapes (concavity, channels, etc) without being entirely cylindrical.

To record and enable monitoring the measured temperatures, the system may further comprise:
- at least one transmitter placed in the FSW tool (or in the coupling head or in a tool holder located in the coupling head) and connected (for example, by means of cables) to the thermocouples, configured for transmitting the temperatures measured by the thermocouples to a receiver outside the tool using wireless communication technology (for example Bluetooth, any technology using radio frequency, any mobile communication technology, etc.);
- an electric battery for powering the transmitter, also placed in the friction stir welding tool (or in the coupling head or in a tool holder located in the coupling head);
- the external receiver configured for receiving the measured temperatures from the transmitter and delivering them to an electronic device (where they can be stored and/or simply be viewed by a user). The receiver communicates with the electronic device through a communications network or can be connected directly to the electronic device or even be part of the electronic device.

The electronic device usually includes a user interface configured for showing to the user the received measured temperatures.

Therefore, according to the invention a system according to the independent claim is provided. Advantageous embodiments are defined in the dependent claims. These and other aspects of the invention will become evident and clear based on the embodiments described below in the present specification.

### Description of the Drawings

To complement the description being made and for the purpose of helping to better understand the features of the invention according to a practical preferred embodiment thereof, a set of drawings is attached as an integral part of said description, in which the following is depicted with an illustrative and non-limiting character:
Figure 1 schematically shows the basic architecture of the system proposed according to an embodiment of the invention.
Figure 2 shows two schematic views of a welding tool, one of such views showing the position of the thermocouple proposed according to an embodiment of the invention.

### Detailed Description of the Invention

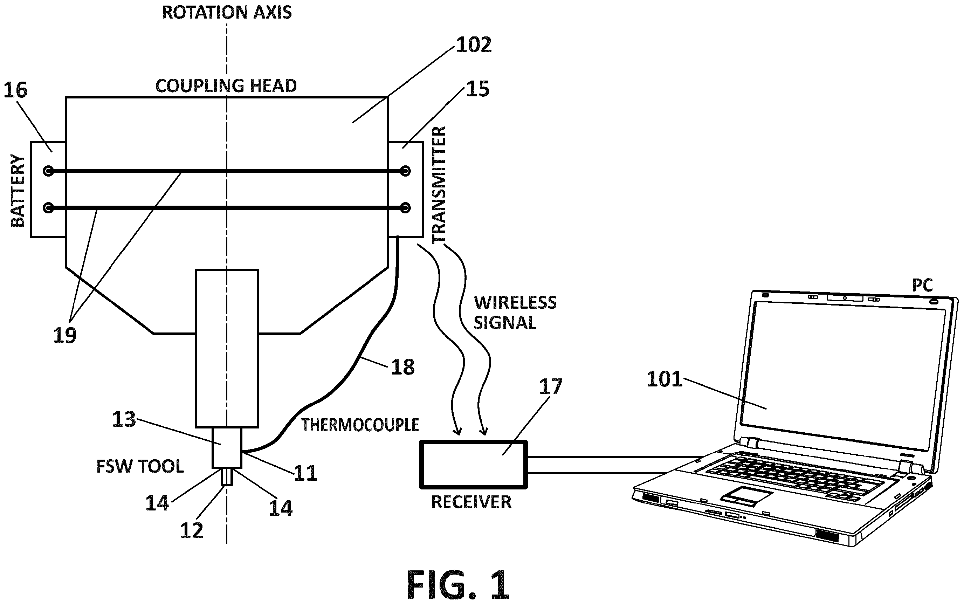

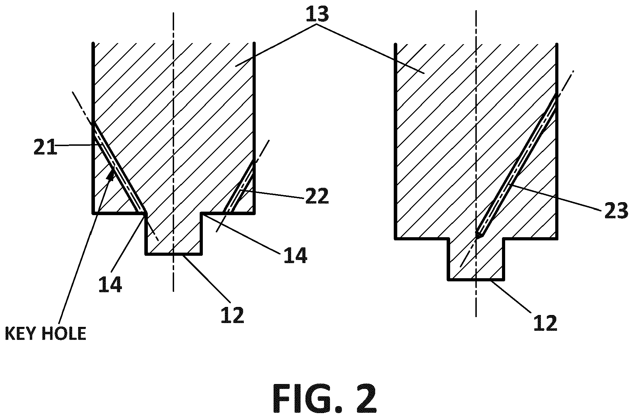

The present invention proposes an electronic system for measuring temperatures generated during the friction stir welding process which allows measuring and recording the maximum temperatures reached in the material to be welded during the process in a continuous, repeatable and reliable manner. As shown in Figure 1, the system will be formed by the following elements:
- One or more thermocouples (11). A thermocouple, also called a thermocouple probe, is a sensor for measuring temperature. It is a transducer, usually formed by different metals attached at one end (called the measuring end or "hot junction," or thermocouple measuring tip) and when the attachment of the two metals is heated or cools down, a (small) difference in potential occurs depending on the difference in temperature between the two ends of the thermocouple. The thermocouples used can be of different types and dimensions. In a preferred embodiment, type K thermocouples with a threaded tip 0.5 mm in diameter will be used. Naturally this is only one embodiment, and other thermocouples of a different type and size can be used in the present invention. As will be explained below, these thermocouples are introduced in holes made in the welding tool, so they will rotate integrally with same in the welding process.
- The friction stir welding tool (FSW) *per se.* As explained above, said tool will have a usually cylindrical shoulder (13) from which there projects a pin (also called probe) (12) which is introduced between the workpieces to be welded and rotates, together with the shoulder, about the longitudinal axis of said pin (and of the shoulder). In the present invention, said tool (as can be seen in Figure 2) will have one or several through holes (also referred to as thru holes); a thermocouple will be housed in each through hole (or in other words, a thermocouple is housed in the channel formed by each through hole). Logically, said through holes must have a diameter greater than the diameter of the thermocouple (so that it can be introduced therein), but it cannot be too much greater because if there is a lot of clearance between the thermocouple and the walls of the hole, the thermocouple may move or the softened or molten material (for example, aluminium) may invade the hole, moving the thermocouple, and accordingly, making the measurement taken less precise (degrading it). In a preferred embodiment, a space measuring only 0.1 mm is left between the hole and the thermocouple; so if the thermocouples are 0.5 mm in diameter, the hole (which will usually have a circular section, though other sections are possible) will have an inner diameter of 0.6 mm. In another embodiment, the inner diameter will be 0.8 mm (these are only examples and other dimensions are possible).
   The positioning of these holes in the tool (and therefore of the thermocouples) is critical to enable measuring the maximum temperature in a reliable manner. So to measure the maximum temperature in a suitable manner without damaging or moving the tip of the thermocouple, it is necessary to make a through hole in the base where the tool pin and shoulder are joined together. In the example shown in Figure 2 (hole 21), the through hole goes from one side of the FSW tool (one side of the tool shoulder) to the area where the tool pin and shoulder (the area where the pin emerges from the tool shoulder) are joined together.
   These are the suitable conditions with which the hole must comply because when the hole is not a through hole or if the position of the hole where the thermocouple is received is not located in the shoulder-pin attachment area (14), the measurements are worse (less reliable), cannot be taken in a continuous manner (because the measurements taken degrade over time), and the thermocouple may furthermore be damaged. So if a blind hole, for example, is made (as would be the case of the hole 23 of Figure 2), the maximum temperature is not measured. Furthermore, if the hole is not placed in the shoulder-pin attachment area (as would be the case of the hole 22 of Figure 2), a temperature measurement close to the maximum is initially obtained, but it is neither reliable nor repeatable since the molten or softened material invades the hole and moves the tip of the thermocouple, rendering the measurement inaccurate.
   In a preferred embodiment, the inclination of the hole (of the longitudinal axis of the hole) with respect to the axis of rotation must be between 30 and 60 degrees, for example, 36 degrees, and preferably 30 degrees (although in other embodiments the inclination of the hole may be any other, even outside the range of between 30 and 60 degrees).
   In addition to these through holes in the previously indicated position, the tool may also have other through holes in other positions, or blind (non-through) holes, where other thermocouples can be housed. As explained, the thermocouples placed in these holes will not be reliable for measuring maximum temperatures but they can be useful for measuring temperatures in some areas of the FSW tool that are of interest in the process. In other words, generally speaking, in the FSW tool there will be as many through holes in the indicated position (in the shoulder and pin attachment area) as there are thermocouples to be used to measure the maximum process temperature, but there may be other holes in the tool housing other thermocouples to measure the temperature during the process in some other areas of the FSW tool (non-maximum temperatures).

Furthermore, to enable sending and displaying and/or storing the measured temperatures, the system usually also preferably comprises a wireless communication module or sub-system having a transmitter or emitter (15), a receiver (17), and usually a battery (16) (for example a 9 V battery or one of any other suitable voltage) for powering the transmitter (to which it is connected by connecting cables 19 between the battery and the transmitter). As can be seen in Figure 1, the transmitter is connected to the thermocouples (by means of connecting cables 18) integrated in the FSW tool and sends a wireless measured temperature signal to the receiver. Therefore, the transmitter and the battery integrally rotate with the FSW tool, whereas the receiver is a stationary element, external to the FSW device. The technology using this communication sub-system can be of any type. Accordingly, it may be mobile technology (GSM, 2G, UMTS, LTE, 4G, etc.), short-range wireless technology, Bluetooth, WLAN, or any other type of radio frequency or wireless communication technology.

As can be seen in Figure 1, the welding machine usually has a part or head called the coupling head (102). Said coupling head directly or indirectly houses the FSW tool *per* se (or more specifically, the shoulder (13) and the pin (11)).

In one embodiment, rotating elements (called rotational elements) are assembled directly in said coupling head to operate the system (transmitter, battery, FSW tool with thermocouples, cables). In an alternative embodiment, a tool holder is used to enable assembling the rotational elements to operate the system (transmitter, battery, FSW tool, thermocouples, cables). The tool holder is an intermediate coupling element between the actual FSW tool and the machine head. There may be one or several depending on the type of machine head and the type of FSW tool. Said tool holder has the same function as the coupling head but may differ with respect to the material with which it is manufactured (usually materials with a higher resistance against high temperatures are used the closer the tool and the FSW welding area are).

The measured temperature (included in the signal received in the receiver) must enable being delivered to (and/or stored in) a device suitable for use, for example for monitoring and/or displaying and/or controlling and/or processing (in a simple system the temperature could simply be displayed without any data being stored). That will be done by means of the so-called temperature monitoring and recording element (101), or more generally electronic device, for example a computer, server, PC and generally any hardware device (with the suitable software) which allows recording and monitoring temperature signals for temperatures measured in the FSW welding process received by the receiver. In other words, the receiver (which is in communication with, by means of a communications network, or directly connected to, by means of cables, this device, or it can even be part of this electronic device) delivers the received information to this device for storage and/or processing and/or viewing by the user. This element may also have a user interface (for example, a screen) and the corresponding software (for example, capture and display software) which allows the interested user to view the measured temperatures (the specific data and, if possible, also in the form of graphs). It can even also have a configurable alarm system which allows notifying the user if the measured temperature departs from a given correct, pre-established operating range.

Figure 2 shows with specific measurements the position of possible holes for placing thermocouples. There is one hole (21) that complies with the conditions proposed by the present invention for measuring maximum temperatures (going from the side of the tool shoulder to the shoulder-pin attachment area), and there are other holes (22, 23) that do not comply with the conditions proposed by the present invention (so they should not be used to house a thermocouple for measuring maximum welding process temperatures, but rather in any case to measure temperatures of another type). The specific position (dimensions) shown in Figure 2 for the hole according to the present invention is only a non-limiting example and naturally other positions are possible, provided that they comply with the conditions previously proposed in the present invention (through hole having one of its ends in the shoulder-pin attachment area) for taking measurements of the maximum temperature in a reliable and repeatable manner. In Figure 2, the hole (21) complying with the conditions proposed by the present invention for measuring maximum temperatures would start in the tool side wall (6.9 mm away from the base of the shoulder) and would end in the shoulder and pin attachment area, with a 60-degree inclination with respect to the plane perpendicular to the axis of rotation (or in other words, 30 degrees with the axis of rotation). With these measurements, the length of the through hole (21) will be about 7.98 mm. In Figure 2, another one of the holes (22) (which does not comply with the conditions proposed by the present invention for measuring maximum temperatures) starts in the tool side wall (3.5 mm away from the base of the shoulder) and ends 2 mm away from the shoulder and pin attachment area, with a 60-degree inclination with respect to the plane perpendicular to the axis of rotation (or in other words, 30 degrees with the axis of rotation). In Figure 2, another one of the holes (23) (which does not comply with the conditions proposed by the present invention for measuring maximum temperatures) would start in the tool side wall (10.4 mm away from the base of the shoulder) and would have a length of 12 mm, with a 60-degree inclination with respect to the plane perpendicular to the axis of rotation (or in other words, 30 degrees with the axis of rotation). In the specific examples shown in Figure 2, the pin will emerge 4 mm away from the side of the shoulder and the pin will have a radius of 2 mm (i.e., the shoulder will have a radius of 6 mm), since it is assumed for this example that both the shoulder and the pin are cylindrical.

As indicated, these are just exemplary values and other measurements are possible for both the position of the hole (for example, the hole (21) can start 10.4 mm away from the base of the shoulder or any other measurement) and for the dimensions of the FSW tool shoulder and pin.

As indicated above, the thermocouple is introduced in the hole made in the FSW tool. The tip of the thermocouple (the measuring end of the thermocouple where the different metals are attached) is fully housed in the hole (i.e., the tip of the thermocouple will reach the end of the through hole, which is in the shoulder and pin attachment area). The other end of the thermocouple may project from the other end of the hole (on the tool shoulder side) and may be fixed thereto by any means (tapes, gums, flanges, screws, etc.). The thermocouple must be fixed properly to the tool to prevent it from moving too much during rotation of the FSW tool.

Although reference is usually made to one hole in the present text for the sake of simplifying the explanation, this is just one example. Several thermocouples can be used, and therefore there will be several holes (one to house each thermocouple used), some of which will comply with the conditions previously proposed in the present invention (through hole in which one of the ends is in the shoulder-pin attachment area) if maximum temperature measurements are to be taken in a reliable and repeatable manner. As indicated, another type of placement of complementary thermocouples (with or without through holes) would also be compatible to enable taking additional temperature measurements.

In this text, the term "comprises" and derivations thereof (such as "comprising", etc.) must not be understood in an exclusive manner, i.e., these terms must not be interpreted as being exclusive of the possibility that what is herein described and defined may include more elements, steps, etc.

Having sufficiently described the nature of the invention as well as the way to put it into practice, it must be stated that the different parts thereof may be manufactured in a range of materials, sizes and shapes, where those variations made advisable by practice could also be introduced in the constitution or method thereof, provided that they do not alter the fundamental principle of the present invention.

This detailed description is provided to help completely understand the invention. Therefore, those skilled in the art will recognize that variations, changes or modifications to the embodiments described herein may be carried out without departing from the scope of protection of the invention. The description of well-known functions and elements are also omitted for the sake of clarity and conciseness. The description and drawings simply illustrate the principles of the invention. Therefore, it must be observed that those skilled in the art may come up with several arrangements which, though not explicitly described or shown herein, represent the principles of the invention and are included within its scope. Furthermore, all the examples described herein are primarily provided for instructional purposes in order to help the reader understand the principles of the invention and the concepts provided by the inventor/inventors to improve the art, and such specifically described examples and conditions must be considered as non-limiting. Furthermore, all that has been described herein in relation to principles, aspects and embodiments of the invention, as well as the specific examples thereof, cover equivalencies thereof.

Although the present invention has been described in reference to specific embodiments, those skilled in the art must understand that the preceding and various other changes, omissions and additions with respect to the form and detail of said embodiments can be done without departing from the scope of the invention as defined by means of the following claims.

## Claims

1. System for measuring temperatures generated during the friction stir welding process, performed by rotating a friction stir welding tool comprising a shoulder (13) from which there emerges a pin (12) which is introduced between the workpieces to be welded, where said system comprises:
- the friction stir welding tool which includes one or several holes;
- one or several thermocouples, where each thermocouple is housed in one of said holes of the welding tool;
where the system is **characterized in that**:
- one or more of said holes are through holes (21), with one end located on one side of the tool shoulder and the other end located in the tool pin and shoulder attachment area (14);
- each thermocouple housed in one of said through holes (21) of the welding tool, is housed such that the thermocouple measuring tip reaches the end of the through hole (21) which is in the shoulder and pin attachment area (14).

2. System according to claim 1, wherein the axis of each of the holes forms a between 30- and 60-degree angle with the axis of rotation of the welding tool.

3. System according to any of the preceding claims, wherein the axis of each of the holes forms a 30-degree angle with the axis of rotation of the welding tool.

4. System according to any of the preceding claims, wherein the thermocouples are type K thermocouples.

5. System according to any of the preceding claims, wherein the thermocouples are thermocouples with a threaded tip 0.5 mm in diameter.

6. System according to any of the preceding claims, wherein the holes (21) have a circular section.

7. System according to any of the preceding claims, wherein the holes (21) have a diameter of 0.6 or 0.8 mm.

8. System according to any of the preceding claims, wherein the shoulder, the pin or both are cylindrical.

9. System according to any of the preceding claims, wherein the system further comprises:
- at least one transmitter (15) connected to the thermocouples, configured for transmitting the temperatures measured by the thermocouples to a receiver (17) outside the tool using wireless communication technology, where the transmitter is placed in the friction stir welding tool or in a tool holder or in a coupling head where the tool is housed;
- an electric battery (16) for powering the transmitter (15), where the electric battery is placed in the friction stir welding tool or in a tool holder or in a coupling head where the tool is housed;
- the receiver (17) configured for receiving the measured temperatures from the transmitter (15) and delivering them to an electronic device (101).

10. System according to claim 9, wherein the communication between transmitter (15) and receiver (17) is performed by means of radio frequency technology.

11. System according to claim 9, wherein the communication between transmitter (15) and receiver (17) is performed by means of Bluetooth technology.

12. System according to claim 9, wherein the communication between transmitter (15) and receiver (17) is performed by means of mobile telephony communication technology.

13. System according to any of the preceding claims 9 to 12, wherein the receiver (17) communicates with the electronic device (101) through a communications network.

14. System according to any of the preceding claims 9 to 12, wherein the receiver (17) is connected directly to the electronic device (101) or the receiver (17) is part of the electronic device (101).

15. System according to any of the preceding claims 9 to 14, wherein the electronic device (101) includes a user interface configured for showing the user the received measured temperatures and/or a memory for storing the received temperatures.
